Europäisches Patentamt

European Patent Office

Office européen des brevets

(19)

(11) Veröffentlichungsnummer : **0 336 099 B1**

# (12) EUROPÄISCHE PATENTSCHRIFT

(45) Veröffentlichungstag der Patentschrift :
21.08.91 Patentblatt 91/34

(51) Int. Cl.⁵ : **B29B 7/60**

(21) Anmeldenummer : 89103235.1

(22) Anmeldetag : 24.02.89

(54) Verfahren zur Polymerbeschickung an Mischaggregaten.

(30) Priorität : 02.04.88 DE 3811328

(43) Veröffentlichungstag der Anmeldung :
11.10.89 Patentblatt 89/41

(45) Bekanntmachung des Hinweises auf die
Patenterteilung :
21.08.91 Patentblatt 91/34

(84) Benannte Vertragsstaaten :
AT BE CH DE ES FR GB IT LI LU NL SE

(56) Entgegenhaltungen :
DE-A- 3 322 760

(73) Patentinhaber : **Continental
Aktiengesellschaft
Königsworther Platz 1
W-3000 Hannover 1 (DE)**

(72) Erfinder : **Feierabend, Ralf, Dr.
Westereschenfeld 38
W-3016 Seelze 5 (DE)**
Erfinder : **Mössinger, Jürgen
Bahnhofstrasse 5c
W-3006 Burgwedel 1 (DE)**

EP 0 336 099 B1

**Beschreibung**

Die Erfindung betrifft ein Verfahren zur Polymerbeschickung an Mischaggregaten, insbesondere an Innenmischern und Walzwerken.

Bei bekannten Verfahren zur Polymerbeschickung werden die Polymere in Form von Pulvern, Granulaten und Spaltprodukten eingezogen. Für die Verarbeitung der Polymere werden Innenmischer, insbesondere solche mit ineinandergreifenden Systemen, sowie Walzwerke eingesetzt. Bei der Verarbeitung der Polymere mit den genannten Teilchenformen ergeben sich unbefriedigende Verarbeitungseigenschaften, die auf ein schwankendes bis schlechtes Einzugsverhalten der benutzten Aggregate zurückzuführen sind. Hieraus resultieren wiederum ungleichmäßige Einzugszeiten sowie ungleichmäßige Energieaufnahmen während der Aufbereitung der Polymere. Zur Verminderung der geschilderten Probleme hat man bisher vor allem versucht, die Teilchengrößen der Polymere zu variieren, so daß die Polymere in Form von Pulvern, Krümeln, Pellets, Granulaten, Ballenspaltprodukten und Chips aufgegeben wurden. Alle diese Maßnahmen haben jedoch bis heute zu keiner befriedigenden Vergleichmäßigung des Einzugsverhaltens geführt.

Der Erfindung liegt deshalb die Aufgabe zugrunde, ein Verfahren zur Polymerbeschickung anzugeben, mit dem eine deutliche Vergleichmäßigung des Einzugsverhaltens erzielbar ist.

Diese Aufgabe wird erfindungsgemäß dadurch gelöst, daß die Polymere in Form von Strängen aufgegeben werden, deren Länge zu ihrem Volumen in der Beziehung

$$\ell \geqq \sqrt[3]{\frac{2500}{\pi} \cdot V}$$

stehen. Die angegebene Beziehung ist im Falle von Strängen mit einer exakten Zylinderform gleichbedeutend mit der Aussage, daß die Länge mindestens dem 25-fachen des Durchmessers entspricht. Zu bevorzugen sind jedoch Polymerstränge mit einer zerklüfteten und mit Einschnitten versehenen Oberfläche, die außerdem über ihre Länge unregelmäßig gekrümmt sein sollten. Eine weitere Verbesserung des Einzugsverhaltens kann bei einzelnen Polymeren dadurch erzielt werden, daß die Stränge in Form von Knäueln aufgegeben werden, d.h. daß sie bei der Aufgabe unregelmäßig ineinander verhakt sind.

Mit der Erfindung erzielt man vor allem den Vorteil einer Verkürzung des Beschickungsvorgangs, d.h. der Beschickzeiten und der Mischzeiten. Sowohl bei der Aufbereitung von Polymeren als auch bei der Herstellung von Grundmischungen und Fertigmischungen für die Kautschuktechnologie ergibt sich ein verbesserter Mastiziereffekt aufgrund wesentlich erhöhter Energieaufnahmen. Durch vergleichmäßigte spezifische Energieeinträge während der Mastizierphase werden Mischzeitschwankungen erheblich reduziert.

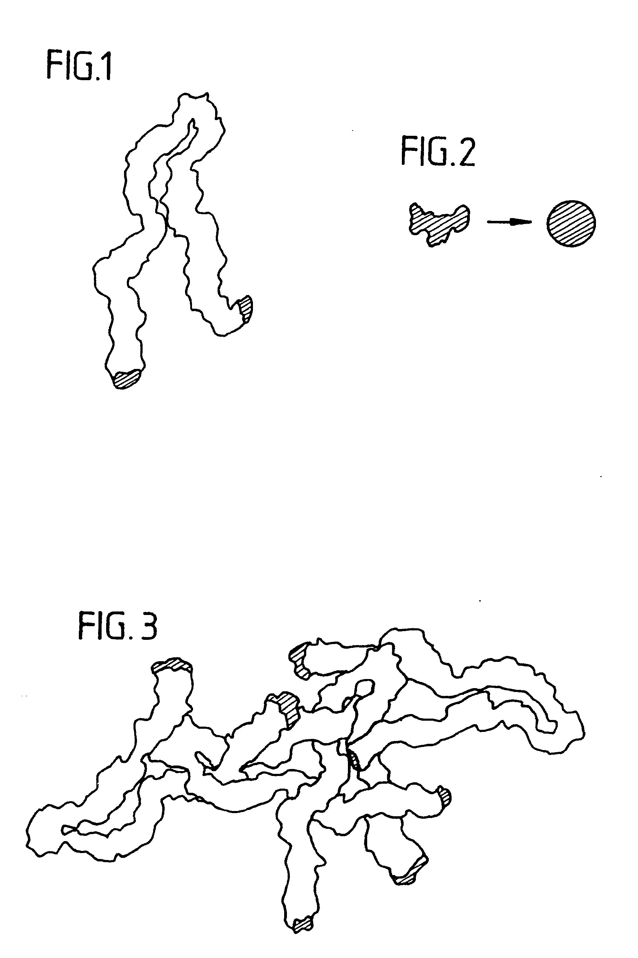

Zur Durchführung des erfindungsgemäßen Verfahrens werden vorab die Stränge z.B. mit Hilfe eines Extruders mit Lochscheibe hergestellt. Strangbeispiele sind in den Fig. 1 bis 3 dargestellt. Fig. 1 zeigt als Beispiel einen Strang aus EPDM-Kautschuk (nicht maßstabgetreu), der eine zerklüftete und mit Einschnitten versehene Oberfläche aufweist und darüber hinaus über seine Länge unregelmäßig gekrümmt ist. Die Vorlage zu diesem Strang hatte eine Länge von ca. 27 cm und einen mittleren Durchmesser von ca. 0,8 cm. Der mittlere Durchmesser ist sehr schwer anzugeben, weil die Durchmesser über die Stranglänge stark variieren und außerdem die Querschnittsebenen so gut wie nie in Kreisform vorliegen. Es wurde deshalb an einer Strangstelle mit einer mittleren Dicke die Querschnittsfläche ermittelt und aus ihr ein Kreis gleichen Flächeninhalts konstruiert (Fig. 2). Aus einer Vielzahl von Versuchen hat sich ergeben, daß besonders gute Ergebnisse mit Polymersträngen erhalten werden, deren Längen mindestens dem 25-fachen des mittleren Durchmessers entsprechen. Um die Unregelmäßigkeiten in den Durchmessern zu eliminieren, ist es günstiger, die Stranglänge nicht zum mittleren Durchmesser ins Verhältnis zu setzen, sondern zum Strangvolumen. Mit der Formel für das Volumen eines Zylinders

$$V = \pi r^2 \cdot l$$

und mit der Bedingung

$$l \geqq 25 \cdot 2r$$

ergibt sich dann die Beziehung

$$\ell \geqq \sqrt[3]{\frac{2500}{\pi} V}$$

In Fig. 3 sind mehrere Polymerstränge dargestellt, die in Form eines Knäuels ineinander verhakt sind.

Zur Durchführung des erfindungsgemäßen Verfahrens werden die Polymerstränge einzeln oder in Knäuelform in einen Innenmischer gegeben. Aufgrund ihrer ungewöhnlichen Form weichen sie im Gegensatz zum bekannten Granulat dem weiteren Mastizierangriff der Kneterschaufeln nicht mehr aus, so daß die Energieeintragung früher einsetzt und über den gesamten Mischvorgang gesehen gleichmäßiger erfolgt.

## Patentansprüche

1. Verfahren zur Polymerbeschickung an Mischaggregaten, insbesondere an Innenmischern und Walzwerken, **dadurch gekennzeichnet,** daß die Polymere in Form von Strängen aufgegeben werden, deren Länge zu ihrem Volumen in der Beziehung

$$\ell \geqq \sqrt[3]{\frac{2500}{\pi} V}$$

stehen.

2. Verfahren nach Anspruch 1, dadurch gekennzeichnet, daß Stränge mit einer zerklüfteten und mit Einschnitten versehenen Oberfläche aufgegeben werden.

3. Verfahren nach Anspruch 1, dadurch gekennzeichnet, daß Stränge aufgegeben werden, deren mittlere Querschnittsflächen einen Flächeninhalt von 0,5-1,5 cm$^2$ aufweisen.

4. Verfahren nach Anspruch 1, dadurch gekennzeichnet, daß Stränge aufgegeben werden, die über ihre Länge unregelmäßig gekrümmt sind.

5. Verfahren nach Anspruch 1, dadurch gekennzeichnet, daß die Stränge als Knäuel aufgegeben werden.

## Claims

1. Method of feeding polymers to mixing assemblies, more especially to internal mixers and rolling mills, characterised in that the polymers are delivered in the form of extruded bodies, the lengths of which are relative to their volumes in accordance with the equation

$$\ell \geqq \sqrt[3]{\frac{1500}{\pi} V}$$

2. Method according to claim 1, characterised in that extruded bodies, having a fissured and indented surface, are delivered.

3. Method according to claim 1, characterised in that extruded bodies are delivered, the average areas of cross-section having a surface area of 0.5-1.5 cm$^2$.

4. Method according to claim 1, characterised in that extruded bodies are delivered, which are irregularly curved over their length.

5. Method according to claim 1, characterised in that the extruded bodies are delivered as twisted forms.

## Revendications

1. Procédé de chargement de polymères dans des groupes mélangeurs, en particulier dans des mélangeurs internes et des mélangeurs à cylindres, caractérisé en ce que les polymères sont introduits en ayant la forme de boudins dont le rapport de la longueur au volume est

$$L \geqslant \sqrt[3]{\frac{2500 \, V}{\pi}}$$

2. Procédé selon la revendication 1, caractérisé en ce que les boudins sont chargés en ayant une surface crevassée et comportant des entailles.

3. Procédé selon la revendication 1, caractérisé en ce que les boudins chargés ont des surfaces moyennes de la section d'une superficie de 0,5-1,5 cm².

4. Procédé selon la revendication 1, caractérisé en ce que les boudins chargés sont recourbés irrégulièrement sur leur longueur.

5. Procédé selon la revendication 1, caractérisé en ce que les boudins sont chargés en pelotes.

# FIG.1

# FIG.2

# FIG.3